# EUROPÄISCHE PATENTSCHRIFT

(11) **EP 2 794 776 B1**
(45) Veröffentlichungstag und Bekanntmachung des Hinweises auf die Patenterteilung: **26.07.2017**
(21) Anmeldenummer: 12813277.6
(22) Anmeldetag: 19.12.2012
(51) Int. Cl.: C09K 11/78, C09D 5/22, D21H 21/48, B41M 3/14

(54) **SICHERHEITSMERKMAL MIT MEHREREN KOMPONENTEN**
SECURITY FEATURE HAVING SEVERAL COMPONENTS
ÉLÉMENT DE SÉCURITÉ À PLUSIEURS COMPOSANTS

(30) Priorität: 23.12.2011 DE 102011122240
(43) Veröffentlichungstag der Anmeldung: 29.10.2014
(73) Patentinhaber: Giesecke & Devrient GmbH, 81677 München (DE)
(72) Erfinder: GIERING, Thomas, 85614 Kirchseeon (DE); KECHT, Johann, 81677 München (DE); STEINLEIN, Stephan, 80538 München (DE)
(86) Internationale Anmeldenummer: PCT/EP2012/005276
(87) Internationale Veröffentlichungsnummer: WO 2013/091859

(56) Entgegenhaltungen:
- DE-A1- 3 048 734

## Beschreibung

Die Erfindung betrifft ein Sicherheitsmerkmal mit einer lumineszierenden Komponente und einer die lumineszierende Komponente tarnenden Komponente.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente zur Produktsicherung zu verstehen.

Die Absicherung von Wertdokumenten gegen Fälschung mittels Sicherheitsmerkmalen mit einer lumineszierenden Komponente ist bereits seit langem bekannt. Die lumineszierende Komponente wird dabei von Substanzen gebildet, die nachfolgend auch als Luminophore bezeichnet werden, und von mit Übergangsmetallen oder Seltenerdmetallen als lumineszierende Ionen dotierten Wirtsgittern gebildet werden. Solche Ionen haben den Vorteil, dass sie, nach entsprechender Anregung, eine oder mehrere charakteristische schmalbandige Lumineszenzen zeigen, die einen sicheren Nachweis und die Abgrenzung gegenüber anderen Spektren erleichtern. Für die Dotierung wurden auch schon Kombinationen von Übergangsmetallen und/ oder Seltenerdmetallen diskutiert. Solche Substanzen haben den Vorteil, dass, zusätzlich zu den obengenannten Lumineszenzen, sogenannte Energietransferprozesse beobachtet werden, die zu komplizierteren Emissionsspektren führen können. Bei diesen Energietransferprozessen kann ein Ion seine Energie auf ein anderes Ion übertragen und die Spektren können dann aus mehreren schmalbandigen Linien bestehen, die charakteristisch für die beiden Ionen sind.

Die genannten Sicherheitsmerkmale zum Absichern von Wertdokumenten weisen als lumineszierende Komponente einzelne Luminophore auf, deren Emissionen sich hinsichtlich ihrer spektralen und/oder zeitlichen Eigenschaften unterscheiden. Die Sicherheitsmerkmale werden in verschiedenen Anwendungsformen in und/ oder auf Wertdokumente ein- und/oder aufgebracht. Dabei kann für die lumineszierende Komponente auch eine Kombination von Luminophoren verwendet werden. Die Emissionsbanden der verwendeten Luminophore stellen eine Spektralkodierung dar. Mehrere verschiedene Luminophore können zu Systemen kombiniert werden, wobei die einzelnen Systeme unabhängig voneinander sind. Die Emission der verwendeten Luminophore wird auch als Lumineszenz bezeichnet, dies kann Fluoreszenz und/ oder Phosphoreszenz beinhalten.

Es ist auch bekannt, dass die beschriebenen Sicherheitsmerkmale nicht alleine von der lumineszierenden Komponente gebildet werden. Als weitere Komponente weisen manche Sicherheitselemente eine Komponente auf, die zur Tarnung der lumineszierenden Komponente eingesetzt wird. In der DE 30 48 734 A1 wird beispielsweise ein Sicherheitspapier mit die Echtheitsmerkmale schützenden Tarnstoffen beschrieben. Die Tarnstoffe der tarnenden Komponenten entsprechen dabei im Wesentlichen den lumineszierenden Komponenten, d. h. sowohl für die lumineszierende Komponente als auch für die tarnende Komponente werden sehr ähnliche oder gleichartige Wirtsgitter und Dotierstoffe verwendet. Jedoch wird bei der Herstellung der Tarnstoffe für die tarnende Komponente darauf geachtet, dass die Tarnstoffe keine lumineszierenden Eigenschaften aufweisen. Dazu werden beispielsweise Parameter beim Glüh- oder Mahlprozess der tarnenden Komponente im Gegensatz zur Herstellung der lumineszierenden Komponente verändert. Alternativ werden sogenannte Lumineszenzkiller verwendet. Dadurch kann die lumineszierende Komponente mit üblichen analysetechnischen Methoden nicht von der tarnenden Komponente unterschieden werden. Hierdurch wird vor allem die Position der lumineszierenden Komponente verschleiert, da sie mit den üblichen Methoden nicht von der tarnenden Komponente unterschieden werden kann.

Da es sich bei lumineszierender und tarnender Komponente um sehr ähnliche oder sogar gleiche Substanzen handelt, wird keine Tarnung der stofflichen Identität der lumineszierenden Komponente erreicht, da durch die Verwendung der tarnenden Komponente die untersuchbare Materialmenge des Sicherheitsmerkmals im zu sichernden Wertdokument insgesamt erhöht wird, weshalb die Analysierbarkeit des Sicherheitsmerkmals bzw. der lumineszierenden Komponente eher erleichtert als erschwert wird.

Ausgehend von diesem Stand der Technik liegt der Erfindung die Aufgabe zugrunde, ein Sicherheitsmerkmal mit einer lumineszierenden Komponente und einer die lumineszierende Komponente tarnenden Komponente anzugeben, wobei die Analyse von Art und Dotierung eines für die lumineszierende Komponente verwendeten Wirtsgitters verhindert oder zumindest wesentlich erschwert werden soll.

Es ist daher Aufgabe der tarnenden Komponente, einen oder mehrere dieser Aspekte schwerer analysierbar zu machen, um so eine Nachahmung des Sicherheitsmerkmals zu erschweren.

Dabei soll bevorzugt eine Tarnung der lumineszierenden Komponente sowohl gegenüber einer Elementaranalyse als auch gegenüber einer Strukturanalyse erreicht werden. Die Identifizierung der lumineszierenden Komponente soll auch für den Fall erschwert werden, dass das Sicherheitsmerkmal in reiner Form vor Einbringung in Wertdokumente und in verdünnter Form z. B. durch Veraschung von echten Wertdokumenten vorliegt, und dann mittels Elementaranalysemethoden wie XRF (Röntgenfluoreszenzanalyse) oder ICP-AES (optische Emissionsspektrometrie mit induktiv gekoppeltem Plasma) oder Strukturanalysemethoden wie Röntgenpulverdiffraktometrie untersucht werden kann.

In einer bevorzugten Ausführungsform sollen alternativ oder zusätzlich die spektralen Eigenschaften des Sicherheitsmerkmals vertarnt werden, so dass bei simpler Spektralanalyse z.B. bei kontinuierlicher und /oder unspezifischer Anregung des Wertdokumentes und Detektion der entstehenden Lumineszenzemission, nicht die korrekte spektrale Signatur der lumineszierenden Komponente gemessen wird.

Dabei soll zudem erreicht werden, dass die Qualität des Sicherheitsmerkmals nicht von produktionsbedingten Schwankungen beeinflusst wird, und später eindeutig identifizierbar ist, um z. B. einem bestimmten Produzenten zugeordnet werden zu können.

Die Lösung dieser Aufgabe ergibt sich aus den unabhängigen Ansprüchen. Weiterbildungen sind Gegenstand der Unteransprüche.

Die Erfindung geht von einem Sicherheitsmerkmal mit einer lumineszierenden Komponente mit mindestens einem Luminophor, bestehend aus einem dotierten Wirtsgitter, und einer die lumineszierende Komponente tarnenden Komponente, aus, wobei für die Tarnung der lumineszierenden Komponente relevante, für eine Identifizierung der lumineszierenden Komponente erforderliche Eigenschaften von der tarnenden Komponente dadurch getarnt werden, dass die relevanten Eigenschaften der lumineszierenden Komponente, nämlich die Struktur des Wirtsgitters der lumineszierenden Komponente, die Stöchiometrie des Wirtsgitters der lumineszierenden Komponente, der elementaren Aufbau des Wirtsgitters der lumineszierenden Komponente, der oder die Dotierstoffe der lumineszierenden Komponente und die Lumineszenzeigenschaften der lumineszierenden Komponente, durch die tarnende Komponente in mindestens zwei, besonders bevorzugt in mindestens drei, ganz besonders bevorzugt in mindestens vier der relevanten Eigenschaften dadurch getarnt werden, dass die tarnende Komponente relevante Eigenschaften aufweist, die den jeweiligen relevanten Eigenschaften der lumineszierenden Komponente entsprechen, wodurch eine Erkennung der lumineszierenden Komponente erschwert oder verhindert wird.

Dazu ist es insbesondere vorgesehen, eine Identifizierung der lumineszierenden Komponente dadurch zu erschweren oder zu verhindern, dass Eigenschaften der tarnenden Komponente und jeweils gleichartige Eigenschaften der lumineszierenden Komponente durch nachfolgende Beziehungen charakterisiert sind:
a) die tarnende Komponente weist ein Röntgendiffraktogramm auf, welches sich mit dem Röntgendiffraktogramm der lumineszierenden Komponente zumindest teilweise überlappt, um die Struktur der lumineszierenden Komponente zu tarnen,
b) die tarnende Komponente enthält mindestens ein kationisches Element, welches auch in einem Wirtsgitter der lumineszierenden Komponente enthalten ist, jedoch nicht alle in diesem Wirtsgitter enthaltenen kationischen Elemente, um die Stöchiometrie der lumineszierenden Komponente zu tarnen,
c) die tarnende Komponente enthält mindestens ein kationisches Element, welches nicht in einem Wirtsgitter der lumineszierenden Komponente enthalten ist, um den elementaren Aufbau dieses Wirtsgitters der lumineszierenden Komponente zu tarnen,
d) die tarnende Komponente enthält mindestens einen Dotierstoff, der nicht als Dotierstoff in der lumineszierenden Komponente enthalten ist, um den oder die Dotierstoffe der lumineszierenden Komponente zu tarnen,
e) die tarnende Komponente enthält mindestens einen Luminophor, der eine geringere Abklingzeit als der in der lumineszierenden Komponente enthaltene Luminophor aufweist, um die spektralen Eigenschaften der lumineszierenden Komponente zur tarnen, wobei die tarnende Komponente und die lumineszierende Komponente mindestens die Beziehungen a) und b) erfüllen.

Die tarnende Komponente weist strukturelle, spektrale und elementare Eigenschaften auf, um die vergleichbaren Eigenschaften der lumineszierenden Komponente zu tarnen. Die tarnende Komponente kann aus einer Substanz bestehen, oder aus mehreren Substanzen bestehen. Die tarnende Komponente kann ein Röntgendiffraktogramm aufweisen, welches das Röntgendiffraktogramm der lumineszierenden Komponente verdeckt. Hierdurch wird die Identifizierung der Struktur der Matrix des Sicherheitsmerkmals erschwert. Dabei können neben der Röntgendiffraktometrie weitere Strukturanalysemethoden angewendet werden, um zusätzlich oder statt des Röntgendiffraktogramms weitere Strukturmerkmale zu analysieren, beispielsweise Kernspinresonanzspektroskopiemethoden wie FK-NMR, Elektronenspinresonanzmethoden, oder eine Analyse über Raman- und IR-Spektroskopiemethoden. Diese weiteren Methoden sind jedoch aufgrund von niedrigen Sensitivitäten bzw. hohen benötigten Mengenanteilen der zu messenden Spezies, Beschränkungen auf wenige spezifische Elemente/Baugruppen, oder mangelnder Eindeutigkeit der Ergebnisse nur sehr bedingt für die Strukturanalyse anorganischer Luminophore geeignet. Bestenfalls werden

Informationen über spezielle Struktursegmente wie Baugruppen, Einbaulagen oder Koordinationsspheren mit spezifischen Signallagen gewonnen, jedoch kein Einblick in die Gesamtstruktur. Zur Tarnung der Struktur ist daher eine auf das Röntgendiffraktogramm der lumineszierenden Komponente angepasste tarnende Komponente bevorzugt.

Besitzt das Sicherheitsmerkmal aufgrund von bestimmten verwendeten Elementen oder Elementgruppen besonders spezifische, eindeutige, oder leicht zu identifizierende Signale in bestimmten Strukturanalysemethoden, kann ein zusätzlicher Schutz aufgebaut werden indem die tarnende Komponente ebenfalls überlappende oder zusätzliche Signale in den entsprechenden bestimmten Strukturanalysemethoden erzeugt um so eine Strukturanalyse durch diese Methoden zu erschweren.

Die tarnende Komponente kann bevorzugt ebenfalls Substanzen enthalten, welche eine Elementaranalyse des Sicherheitsmerkmals erschweren, wobei verschiedene zu tarnende Teilaspekte, nämlich die in der Matrix enthaltenen Elemente, die Stöchiometrie der Matrix und die Dotierstoffe der Matrix zu unterscheiden sind.

Eine Tarnung der in der Matrix enthaltenen Elemente kann z. B. durch Erhöhung der möglichen Elementkombinationen erreicht werden, also indem zusätzliche chemische Elemente in der tarnenden Komponente des Sicherheitsmerkmals in größeren Mengen enthalten sind, welche bei einer Elementaranalyse die korrekte Zuweisung der Matrixelemente der lumineszierenden Komponente erschweren.

Eine Tarnung der Stöchiometrie der Matrix kann durch Stoffe der tarnenden Komponente erreicht werden, deren Elemente ganz oder teilweise mit einzelnen Elementen der Matrix des Sicherheitsmerkmals übereinstimmen. Hierdurch wird das über Elementaranalyse bestimmbare Verhältnis zwischen einzelnen Elementen der Matrix der lumineszierenden Komponente verzerrt.

Eine Tarnung von Dotierstoffen der Matrix, welche jeweils aus Seltenerden und/ oder Übergangsmetallen bestehen, wird durch Zusatz von weiteren Seltenerd- bzw. Übergangsmetallverbindungen in geringen Mengen erreicht. Hierdurch steigt die Anzahl an möglichen Kombinationen der eingesetzten Luminophore und Sensitizer, wodurch eine korrekte Analyse erschwert wird.

Eine Tarnung der spektralen Eigenschaften der lumineszierenden Komponente kann durch gleichartige Lumineszenzsignale der tarnenden Komponente bewirkt werden. Es wäre jedoch im Anwendungsfall nachteilig, da zusätzliche, gleichzeitig detektierbare Lumineszenzsignale eine genaue Detektion und Beurteilung der lumineszierenden Komponente erschweren oder verhindern würden. Dies ist besonders dann der Fall, wenn solche zusätzlichen Lumineszenzsignale in einem ähnlichen oder gleichen Spektralbereich wie die Lumineszenzsignale der lumineszierenden Komponente liegen, wie es für eine effektive Tarnung notwendig wäre. Bevorzugt enthält die tarnende Komponente daher keine zusätzlichen anorganischen Luminophore. Bevorzugt können organische Luminophore, welche deutlich geringere Abklingzeiten besitzen, verwendet werden, um die Lumineszenzemission der lumineszierenden Komponente ganz oder teilweise zu verdecken. Bei kontinuierlicher Anregung wird so das spezifische Lumineszenzspektrum der anorganischen lumineszierenden Komponente durch das Lumineszenzspektrum des organischen Luminophors verdeckt und damit getarnt. Bei gepulster Anregung kann, bedingt durch die schnelle Abklingzeit des organischen Luminophors, die Lumineszenz der anorganischen lumineszierenden Komponente gemessen und damit störungsfrei überprüft werden. Sind die genauen Messparameter (z. B. die gepulste Anregung) nicht bekannt, können daher die spektralen Eigenschaften der lumineszierenden Komponente nicht korrekt erkannt werden.

Obwohl organische Luminophore ebenfalls als Luminophore bezeichnet werden, sollen sie im Rahmen dieser Erfindung nicht zur lumineszierenden Komponente gezählt werden, da hierunter ausschließlich die zur Echtheitsbestimmung detektierten anorganischen Luminophore verstanden werden.

Bevorzugt enthält die tarnende Komponente daher einen oder mehrere organische Luminophore deren Lumineszenzemission die Lumineszenzemission der lumineszierenden Komponente verdeckt.

Bevorzugt erfüllen einzelne Substanzen der tarnenden Komponente mehrere Tarnfunktionen gleichzeitig. Beispielsweise kann die das Röntgendiffraktogramm tarnende Substanz der tarnenden Komponente gleichzeitig ein Element der lumineszierenden Komponente enthalten und so die Stöchiometrie der Matrix der lumineszierenden Komponente tarnen.

Zusätzlich zur tarnenden Komponente kann das Sicherheitsmerkmal ein oder mehrere zusätzliche funktionale Komponenten enthalten, beispielsweise eine Produktionskomponente, zur Einstellung der Signalintensität der Lumineszenz der lumineszierenden Komponente auf einen vorgebbaren Nennwert, oder eine Kodierungskomponente, zur forensischen Kennzeichnung des Sicherheitsmerkmals. Bevorzugt erfüllen diese Komponenten ebenfalls eine Tarnfunktion oder sind Bestandteil der tarnenden Komponente.

Bevorzugt werden einzelne Substanzen der tarnenden Komponente und/oder der zusätzlichen Komponenten so gewählt, dass eine oder mehrere dieser Substanzen analog zur lumineszierenden Komponente durch andere Substanzen der tarnenden Komponente gegen Struktur- oder Elementaranalyse getarnt werden. Beispielsweise kann eine die Stöchiometrie der lumineszierenden Komponente tarnende Substanz gleichzeitig die Stöchiometrie der Kodierungskomponente tarnen. Dabei enthält die die Stöchiometrie tarnende Substanz sowohl mindestens ein gleiches Element wie die lumineszierende Komponente als auch mindestens ein gleiches Element wie die Kodierungskomponente. Ebenso kann beispielsweise das Röntgendiffraktogramm der Produktionskomponente ein teilweise überlappendes Röntgendiffraktogramm mit einer die elementare Zusammensetzung der Luminophormatrix tarnenden Substanz der tarnenden Komponente aufweisen. Hierdurch wird eine Strukturanalyse sowohl des die elementare Zusammensetzung tarnenden Stoffes als auch der Produktionskomponente erschwert.

Von den für die Tarnung der lumineszierenden Komponente genannten relevanten Eigenschaften, nämlich
der Struktur der Matrix der lumineszierenden Komponente,
der Stöchiometrie der Matrix der lumineszierenden Komponente,
dem elementaren Aufbau der Matrix der lumineszierenden Komponente, den Dotierstoffen der lumineszierenden Komponente und
den Lumineszenzeigenschaften der lumineszierenden Komponente, werden durch die tarnende Komponente mindestens zwei, besonders bevorzugt mindestens drei, ganz besonders bevorzugt mindestens vier der genannten Eigenschaften getarnt.

In einer weiteren bevorzugten Ausführungsform werden durch die tarnende Komponente mindestens die Stöchiometrie der Matrix, der elementare Aufbau der Matrix und die Dotierstoffe der lumineszierenden Komponente getarnt.

In einer weiteren bevorzugten Ausführungsform werden durch die tarnende Komponente mindestens das Röntgendiffraktogramm und die Stöchiometrie der lumineszierenden Komponente getarnt. Besonders bevorzugt werden dabei zusätzlich noch die Matrixelemente und Dotierstoffe der lumineszierenden Komponente getarnt.

In einer weiteren bevorzugten Ausführungsform werden durch die tarnende Komponente mindestens die spektralen Eigenschaften sowie die Stöchiometrie, der elementare Aufbau der Matrix und die Dotierstoffe der lumineszierenden Komponente getarnt.

In einer weiteren bevorzugten Ausführungsform werden die spektralen Eigenschaften sowie das Röntgendiffraktogramm getarnt. Besonders bevorzugt werden zusätzlich zu den spektralen Eigenschaften und dem Röntgendiffraktogramm sowohl die Stöchiometrie, der elementare Aufbau der Matrix und die Dotierstoffe der lumineszierenden Komponente getarnt.

Die unterschiedlichen bevorzugten Ausführungsformen berücksichtigen dabei, dass für unterschiedliche Sicherheitsmerkmale je nach Natur der lumineszierenden Komponente unterschiedliche Tarnaspekte Vorrang haben können. Beispielsweise ist eine Änderung der durch Elementaranalyse detektierten Stöchiometrieverhältnisse besonders vorteilhaft, wenn es sich bei der lumineszierenden Komponente um eine Verbindung handelt, in welcher durch Variation eines relativen Verhältnisses zweier Matrixbestandteile die Lumineszenzeigenschaften verändert werden können. Ebenso kann es bei lumineszierenden Komponenten mit einer Kristallstruktur, welche isotype Strukturen mit unterschiedlichen Elementen ausbildet, besonders sinnvoll sein, mehrere solcher zusätzlicher Elemente über die tarnende Komponente beizusteuern. In diesem Fall kann, selbst wenn die Kristallstruktur der lumineszierenden Komponente vollständig entschlüsselt wird, kein einfacher Rückschluss auf die Elemente der lumineszierenden Komponente gezogen werden.

Ebenso kann es bei Luminophoren mit stark strukturabhängigen Emissionsspektren, wie sie beispielsweise typischerweise bei Dotierung mit Übergangsmetallen auftreten, besonders vorteilhaft sein vorrangig das Röntgendiffraktogramm zu tarnen, da hier die Struktur einen besonders wichtigen Faktor zur Identifizierung des Luminophors darstellt.

Ebenso kann es bei einer lumineszierenden Komponente mit einem für bestimmte Materialgruppen oder Kristallstrukturen besonders spezifischen Emissionsspektrum bevorzugt sein, besonderes Gewicht auf die Tarnung der spektralen Eigenschaften zu legen, so dass die eigentliche Natur der Emission der lumineszierenden Komponente nur durch komplexere Spektralanalysen erkannt werden kann.

Die Erfindung weist den Vorteil auf, dass durch die einzelnen Bestandteile bzw. Substanzen der tarnende Komponente verschiedene Aspekte der Zusammensetzung, Struktur oder spektralen Eigenschaften der lumineszierenden Komponente, in Abhängigkeit von den besonderen Eigenschaften der jeweiligen lumineszierenden Komponente, so getarnt werden, dass eine Identifizierung und Nachahmung der lumineszierenden Komponente erschwert oder unmöglich ist.

Weitere Vorteile der vorliegenden Erfindung ergeben sich aus den abhängigen Ansprüchen sowie der nachfolgenden Beschreibung von Ausführungsformen.

Sicherheitsmerkmale zur Absicherung oder Kennzeichnung von Wertdokumenten mit einer lumineszierenden Komponente, auf Basis von Luminophoren aus mit Übergangsmetallen oder Seltenerdmetallen als lumineszierende Ionen dotierten Wirtsgittern mit spezifischen Eigenschaften in ihrer Emission und/oder Anregung, sind z. B. aus WO 81/03507A1, EP 0 966 504 B1, WO 2011/084663 A2, DE 198 04 021 A1 und DE 10111116 A1 bekannt. Solche Sicherheitsmerkmale werden entweder direkt in Form eines Pulvers bei der Herstellung von Papier der Papiermasse zugesetzt, bzw. anderen Substratmaterialien von Wertdokumenten, wie Kunststoffen. Alternativ oder zusätzlich wird das Pulver einer Druckfarbe zugefügt, welche dann auf das Substrat der Wertdokumente aufgedruckt wird. Das Sicherheitsmerkmal kann auch in anderen Bestandteilen von Wertdokumenten enthalten sein, z. B. in Fäden, Planchetten, Patches usw., die ihrerseits in Wertdokumente eingebracht oder auf diese aufgebracht sind.

Die pulverförmigen Sicherheitsmerkmale mit lumineszierender Komponente in Form der zuvor genannten Luminophore enthalten zudem eine die lumineszierende Komponente tarnende Komponente. Die tarnende Komponente ist dabei derart gewählt, dass sie bei den eingangs genannten Struktur- und Elementaranalysemethoden zu einer Verdeckung bzw. Tarnung der lumineszierenden Komponente führt und/ oder deren Lumineszenzemission verdeckt. Dazu weist die tarnende Komponente beispielsweise ein Röntgendiffraktogramm auf, das zumindest teilweise mit dem Röntgendiffraktogramm der lumineszierenden Komponente überlappt, wie unten noch genauer ausgeführt werden wird. Durch die zumindest teilweise Deckungsgleichheit der Röntgendiffraktogramme in signifikanten Peaks von lumineszierender Komponente und tarnender Komponente kann deshalb nicht oder zumindest nur wesentlich erschwert durch gängige Strukturanalysemethoden wie der Röntgenpulverdiffraktometrie auf die im Sicherheitsmerkmal vorhandene lumineszierende Komponente geschlossen werden.

Ziel der Elementaranalyse des Sicherheitsmerkmals ist es, durch quantitative Analyse der Bestandteile des Sicherheitsmerkmals, einen Rückschluss über die Identität der verwendeten Wirtsgitter zu erhalten. Dabei können über Methoden wie z. B. XRF besonders "schwere" Elemente gut detektiert werden. Problematisch ist u. a. die Quantifizierung von Sauerstoff, welcher weder durch XRF noch ICP-AES und ähnlichen Methoden detektiert werden kann. Da der Sauerstoff nach Detektion der anderen Bestandteile des Wirtsgitters üblicherweise den "Rest" der Matrix bildet (z. B. als Oxidion), ist seine Detektion zur Identifizierung des Wirtsgitters jedoch auch nicht unbedingt erforderlich. Wurden die kationischen Bestandteile des Wirtsgitters quantifiziert, können selbst bei Gemischen aus verschiedenen Substanzen über Verhältnisbildung der Bestandteile die enthaltenen Wirtsgitter identifiziert werden. So enthält beispielsweise ein Gemisch aus ZnAl₂O₄ und BaMnO₄ unabhängig vom Mischungsverhältnis der beiden Elemente Zn und Al immer in einem Verhältnis 1:2 sowie Ba und Mn immer in einem Verhältnis 1:1. Es ist somit naheliegend diese Bestandteile jeweils einem Wirtsgitter zuzuweisen wodurch diese identifiziert werden können.

Um ein derartiges Vorgehen zu verhindern bzw. wenigstens zu erschweren, müssen die jeweiligen Substanzen, deren Stöchiometrie vertarnt werden soll, insbesondere die lumineszierende Komponente, mindestens ein gemeinsames Element mit einer anderen Substanz der tarnenden Komponente aufweisen. Der Anteil des jeweiligen chemischen Elements muss dabei in einer ausreichenden Größenordnung vorhanden sein um die Verhältnisbildung aus der elementaren Analyse signifikant zu verzerren. Beispielsweise wird in einem Gemisch aus ZnMn₂O₄ und BaMnO₄ kein korrektes ganzzahliges Verhältnis zwischen den Anteilen an Zn und Mn oder zwischen Ba und Mn gefunden werden, da Mn in beiden Wirtsgittern vorhanden ist, welche die Komponenten bzw. Substanzen bilden. Bevorzugt ist dabei der detektierte Mengenanteil des überlappenden chemischen Elements einer Verbindung gegenüber der reinen Verbindung um mindestens 30%, bevorzugt mindestens 50%, besonders bevorzugt mindestens 100% erhöht. Der Mengenanteil kann auch um mindestens 200% erhöht sein.

Um die Tarnung der Stöchiometrie der lumineszierenden Komponente durch die tarnende Komponente zu erreichen, weist die tarnende Komponente mindestens ein Element der die lumineszierende Komponente bildenden Substanz auf. Unter Element soll dabei ein chemisches Element verstanden werden, welches sowohl in der die lumineszierende Komponente bildenden Substanz als auch in der die tarnende Komponente bildenden Substanz enthalten ist. Insbesondere soll unter Element oder chemischen Element nicht verstanden werden, dass ein oder mehrere identische Atome Bestandteil von zwei Komponenten sind. Weist die die lumineszierende Komponente bildende Substanz beispielsweise die Elemente A und B auf, so kann eine die tarnende Komponente bildende Substanz die Elemente A und C oder B und C aufweisen, wobei die Elemente A, B und C nicht von Sauerstoff oder Wasserstoff gebildet werden. Neben den Elementen A, B und C können die Substanzen weitere Elemente aufweisen, insbesondere auch Sauerstoff und/oder Wasserstoff. Sauerstoff und Wasserstoff sollen aber nicht als Elemente betrachtet werden, die eine Verschränkung der Substanzen im Sinne der vorliegenden Erfindung bewirken. Geeignete Elemente sind besonders kationische Matrixbestandteile, insbesondere Kationen von Metallen, Übergangsmetallen, Halbmetallen und Seltenerden. Elementkationen können durch Hinzunahme von Sauerstoff auch anionische Untergruppen als Matrixbestandteile bilden, die ebenfalls zur Verschränkung geeignet sind. So können beispielsweise Phosphor- und Silizium-Kationen in einer Matrix z.B. in Form von Phosphaten und Silikaten vorliegen. Eine Verschränkung der Substanzen im Sinne der vorliegenden Erfindung kann durch die Hauptgruppenelemente Li, Be, B, Na, Mg, Al, Si, P, S, K, Ca, Ga, Ge, As, Se, Rb, Sr, In, Sn, Sb, Te, Cs, Ba, Tl, Pb, Bi, sowie durch beliebige Elemente der Übergangsmetalle und Seltenen Erden gebildet werden.

Die zuvor beschriebenen Elemente oder chemischen Elemente im Sinne dieser Erfindung werden deshalb alternativ auch als kationische Elemente, kationische Matrixbestandteile, kationische Bestandteile des Wirtsgitters oder Elementkationen bezeichnet. Dadurch soll klar zum Ausdruck gebracht werden, dass insbesondere die chemischen Elemente Sauerstoff und/ oder Wasserstoff nicht als die chemischen Elemente betrachtet werden, die eine Verschränkung der Substanzen im Sinne der vorliegenden Erfindung bewirken.

Zur Tarnung der elementaren Zusammensetzung der Matrix der lumineszierenden Komponente kann zudem mindestens ein neues, nicht in der Matrix enthaltenes kationisches Element über eine Substanz der tarnenden Komponente dem Sicherheitsmerkmal zugefügt werden. Hierdurch erhöht sich die Anzahl der in einer Elementaranalyse detektierten chemischen Elemente, wodurch die Zusammensetzung der Matrix schwerer zu bestimmen ist. Bevorzugt werden die zusätzlichen kationischen Elemente in einer Menge von mindestens 30%, bevorzugt mindestens 50%, besonders bevorzugt mindestens 80% der molaren Menge eines kationischen Matrixelementes, bevorzugt des häufigsten kationischen Matrixelementes, der lumineszierenden Komponente zugefügt. Dabei werden durch die tarnende Komponente mindestens ein, bevorzugt mindestens zwei, besonders bevorzugt mindestens drei zusätzliche kationische Elemente zugefügt.

Zur Tarnung eines oder mehrerer Dotierstoffe der Matrix der lumineszierenden Komponente werden der tarnenden Komponente zusätzliche Luminophore und/ oder Sensitizer beigefügt, so dass bei Elementaranalyse die möglichen Kombinationen für Dotierstoffe der Luminophormatrix erhöht sind. Zur Vertarnung von Seltenerd-Dotierstoffen werden daher bevorzugt die Seltenerden Ce, Pr, Nd, Sm, Eu, Tb, Dy, Ho, Er, Tm, Yb verwendet. Bei diesen handelt es sich entweder um im NIR-Bereich lumineszierende Luminophore, oder um Sensitizer bzw. Dotierstoffe welche über ihre elektronische Struktur z. B. durch Energietransfer oder Quenching-Effekte Einfluss auf die Lumineszenz-Eigenschaften von Seltenerdluminophoren haben können und daher oft als Kodotierungen anzutreffen sind. Zur Tarnung von Übergangsmetall-Luminophoren, z. B. Cr³⁺, können neben den oben genannten Seltenerden bevorzugt auch andere Übergangsmetalle eingesetzt werden die als Luminophor bekannt sind. Beispielsweise kann im Fall von Cr als Luminophor zur Vertarnung bevorzugt eine Zugabe von Mn- oder Fe-Verbindungen erfolgen.

Zur Tarnung der Dotierstoffe der Matrix der lumineszierenden Komponente wird mindestens ein zusätzliches Dotierstoffelement zugefügt, bevorzugt mindestens zwei zusätzliche Elemente. Die zur Tarnung der Dotierstoffe der tarnenden Komponente zugefügten Elemente sollten in einer vergleichbaren molaren Menge zu einem Dotierstoff der lumineszierenden Komponente vorliegen. Vergleichbar soll dabei bedeuten, dass die molare Menge des Zusatzes mindestens 30% der molaren Menge eines Dotierstoffes der lumineszierenden Komponente beträgt. Die Seltenerdmetalle können dabei fest in das Gitter einer anderen Substanz eingebaut sein, oder auch, z. B. falls sich ein direkter Einbau in die Matrix einer Substanz als technisch nachteilig erweist oder umständlich ist, bevorzugt als zusätzliche separate Substanz der tarnenden Komponente zugemischt sein. Wird eine separate seltenerdhaltige Substanz eingesetzt, beträgt sein Anteil an der Gesamtmischung bevorzugt 0,5 bis 4%, besonders bevorzugt 1 bis 2%.

Zur Tarnung der Lumineszenzeigenschaften der lumineszierenden Komponente werden bevorzugt organische oder metallorganische Luminophore eingesetzt. Diese sollten geringe Abklingzeiten von kleiner 10 µs, bevorzugt kleiner 1 µs besitzen, um die Detektion der anorganischen lumineszierenden Komponente nicht zu beeinträchtigen. Ihre Lumineszenzemission sollte dabei ganz oder teilweise den Bereich der Lumineszenzemission der anorganischen lumineszierenden Komponente verdecken. Die Lumineszenzemission des organischen Luminophors kann im Gegensatz zu der des anorganischen Luminophors auch breit und/oder unstrukturiert sein. Bevorzugt luminesziert der organische Luminophor ausschließlich im nicht-sichtbaren Bereich, um keine unerwünschten sichtbaren Lumineszenzen des Wertdokumentes zu verursachen. Bei dem organischen Luminophor kann es sich beispielsweise um Laserfarbstoffe, Metallkomplexe oder andere NIR-Leuchtstoffe, z. B. Sicherheitsmarker, handeln. Metallorganische Sicherheitsmarker und organische NIR-Luminophore sind beispielsweise aus den Schriften WO 2009/005733A2, US 6,174,400 B1 und US2011/0079733A1 bekannt. Der organische Luminophor kann dabei als Reinstoff eingesetzt werden, oder in verdünnter Form auf ein Trägermaterial aufgebracht sein. Generell sind Reinstoffe bevorzugt wenn das Sicherheitsmerkmal in Drucktinten, Lacken und Polymeren eingesetzt wird, und die Aufbringung in Trägermaterialien bevorzugt wenn das Sicherheitsmerkmal in die Papiermasse eingebettet wird. Zur Stabilisierung in einem Trägermaterial kann der organische Luminophor beispielsweise in Polymere, z. B. in Form von Polymer-Mikrokugeln, eingebettet sein. Ebenso ist es möglich organische Luminophore auf anorganische Medien mit hoher externer oder interner Oberfläche aufzuziehen, beispielsweise Schichtsilikate, Zeolithe oder poröse Oxide wie mesoporöses Silika. Der bevorzugte Anteil des organischen Luminophors, bzw. des in ein Trägermaterial integrierten organischen Luminophors, im Sicherheitsmerkmal beträgt 1 bis 30%, bevorzugt 5 bis 20%.

Das Sicherheitsmerkmal weist 20% bis 80% der lumineszierenden Komponente auf, bevorzugt 25% bis 60%, besonders bevorzugt 30% bis 50% (alle Angaben sowie nachfolgende und vorherige Angaben jeweils in Gewichtsprozent). Es handelt sich dabei um einen im nicht-sichtbaren Spektralbereich emittierenden Luminophor, bestehend aus einem dotierten Wirtsgitter. Vorzugsweise besitzen die Luminophore hohe Quantenausbeuten bzw. Signalintensitäten und geeignete Abklingzeiten um selbst bei geringen Einsatzmengen in den Wertdokumenten und hohen Bewegungsgeschwindigkeiten, wie sie beispielsweise in Banknotenbearbeitungsmaschinen mit einer Bearbeitungsgeschwindigkeit von bis zu 40 Banknoten pro Sekunde oder mehr auftreten, eine fehlerfreie Überprüfbarkeit zu gewährleisten. Geeignete Luminophore für die lumineszierende Komponente sind beispielsweise anorganische kristalline Matrizen wie Oxide, z.B. in Form von Granaten, Spinellen, oder Perowskiten, sowie Oxisulfide, Sulfide, Silikate, Phosphate, Aluminate, Niobate, Tantalate, Vanadate, Germanate, Arsenate, Zirkonate oder Wolframate welche mit Seltenerden und/ oder Übergangsmetallen dotiert sind und Abklingzeiten im Bereich zwischen 50 µs und 10 ms besitzen.

Die tarnende Komponente ist in dem Sicherheitsmerkmal zu 20% bis 80%, bevorzugt 40% bis 70%, besonders bevorzugt 50% bis 70% enthalten. Neben der tarnenden Komponente können auch weitere, nicht-tarnende Komponenten im Sicherheitsmerkmal enthalten sein.

Ist in der tarnenden Komponente eine Substanz enthalten, welche das Röntgendiffraktogramm der lumineszierenden Komponente verdeckt, richtet sich seine Einsatzmenge nach der Menge und relativen Kristallinität der lumineszierenden Komponente. Damit ist gemeint, dass die relative Intensität der tarnenden Komponente, in einem Diffraktogramm der Mischung mit der lumineszierenden Komponente, diese in den überdeckenden Bereichen genügend verdeckt. Zeigt die lumineszierende Komponente z. B. aufgrund einer geringen Korngröße oder eines geringen Anteils in der Mischung nur ein geringes Signal im Diffraktogramm, bzw. weist die tarnende Komponente aufgrund ihrer hohen Kristallinität oder geeigneten Zusammensetzung ein besonders hohes Signal im Diffraktogramm auf, so muss von der tarnenden Komponente bzw. dem in der tarnenden Komponente enthaltenen das überdeckende Röntgendiffraktogramm aufweisenden Stoff insgesamt weniger Material eingesetzt werden um die gewünschte Tarnwirkung zu erzielen. Um eine zur Tarnung ausreichende Verzerrung des Diffraktogramms zu erreichen wird durch die tarnende Komponente im überlappenden Bereich des Diffraktogramms der lumineszierenden Komponente eine relative Änderung des Flächenintegrals eines überlappenden Peaks der lumineszierenden Komponente von mindestens 20%, bevorzugt mindestens 40%, besonders bevorzugt mindestens 60%, ganz besonders bevorzugt mindestens 80% verursacht.

Die tarnende Komponente muss dabei in solcher Menge dem Sicherheitsmerkmal hinzugefügt werden, dass bei Röntgenpulverdiffraktometrie des Sicherheitsmerkmals die jeweiligen Peaks der tarnenden und lumineszierenden Komponente vergleichbar stark sind. Die Röntgendiffraktogramme der tarnenden und der lumineszierenden Komponente dürfen dabei nicht identisch oder stark ähnlich sein, da hierdurch eine Analyse nicht erschwert sondern erleichtert wird. Es sollen also nicht strukturverwandte Substanzen eingesetzt werden. Es ist jedoch ebenfalls nicht vorteilhaft wenn die Peakpositionen beider Röntgendiffraktogramme keine Übereinstimmung zeigen, da hier eine Auftrennung in die Einzelkomponenten besonders einfach ist. Vorzugsweise wird die tarnende Komponente in einer Form eingesetzt, so dass mindestens eine, vorzugsweise zwei, besonders bevorzugt drei relevante Peakpositionen der tarnenden Komponente mit entsprechenden Peakpositionen der lumineszierenden Komponente übereinstimmen. Unter übereinstimmen" soll dabei verstanden werden, dass sich die Peakmaxima der beiden Peaks von lumineszierender und tarnender Komponente höchstens um 1°, bevorzugt höchstens um 0,5°, besonders bevorzugt höchstens um 0,2° (20) unterscheiden. Unter "relevant" soll dabei verstanden werden, dass es sich um einen genügend starken Peak handelt, um für die Identifizierung der Substanz bedeutsam zu sein. Vorzugsweise haben die zwei bis drei überlappenden Peaks mindestens 20%, besonders bevorzugt mindestens 50% der Höhe des Hauptpeaks. Besonders bevorzugt ist einer der übereinstimmenden Peaks ein Hauptpeak oder beide Hauptpeaks der die lumineszierende Komponente und die tarnende Komponente bildenden Substanzen. Durch diese teilweise Überlappung wird eine Identifizierung und Trennung der einzelnen Röntgendiffraktogramme erschwert. Dies ist besonders der Fall, wenn die tarnende Komponente mindestens eine Substanz aufweist, deren Röntgendiffraktogramm nicht allgemein bekannt ist, also nicht in gängigen Strukturdatenbanken enthalten ist. Neben dem Strukturtyp selbst ist es ebenfalls möglich aus der relativen Höhe einzelner Peaks Rückschlüsse über den Elementgehalt bzw. den Verteilungsgrad von stöchiometrischen oder nichtstöchiometrischen Mischverbindungen zu erhalten. Beispielsweise können viele Strukturen unter Austausch der Elemente an bestimmten Kristallpositionen homogene Mischreihen mit unterschiedlichen Elementen bilden, welche sich in der Struktur, speziell den Dimensionen der Elementarzelle, nur wenig unterscheiden, jedoch anhand ihrer unterschiedlichen relativen Peakhöhen identifiziert werden können. Daher wird als zusätzlicher Vorteil selbst bei erfolgreicher Identifizierung und Trennung der einzelnen Röntgendiffraktogramme durch die lokale Überlappung das genaue relative Verhältnis zwischen einzelnen Peakhöhen verschleiert, so dass hierdurch Rückschlüsse auf die genaue Stöchiometrie der getarnten Matrizen wesentlich erschwert werden.

Um eine derartige Übereinstimmung von bestimmten Peakpositionen der Substanzen von lumineszierender und tarnender Komponente zu erreichen, kann es notwendig sein, die Gitterkonstanten der Substanz der tarnenden Komponente gezielt anzupassen. Dies geschieht bevorzugt durch partielle Substitution einer Gitterkomponente durch einen geeigneten Anteil an Atomen mit größerem und/ oder kleinerem Radius. In den Strukturen bestimmter Substanzen ist hierdurch eine stetige Änderung der Gitterparameter erreichbar, z. B. eine Aufweitung des Gitters durch Einbau von Atomen eines größeren Atomradius, wodurch wiederum die Peakpositionen des Röntgendiffraktogramms verschoben werden. Als weiteren Vorteil sind die Peakpositionen solcher teilsubstituierter Substanzen in gängigen Röntgenstrukturdatenbanken oft nur für bestimmte einzelne Substitutionsanteile vorhanden, wodurch eine Analyse weiter erschwert wird. Beispielsweise findet man für eine Substanz A₂SiO₄ bei einer Substitution von A mit B oft die Varianten vollständiger Substitution B₂SiO₄, halber Substitution ABSiO₄, und keiner Substitution A₂SiO₄, jedoch nicht beliebige Verhältnisse z. B. A_{0,21}B_{1,79}SiO₄. Beispielsweise sind die Diffraktogramme der isostrukturellen Verbindungen Ba₂SiO₄, BaCaSiO₄ und Ca₂SiO₄ bekannt. Die Positionen der beiden stärksten XRD-Peaks sind dabei jeweils 29,4° und 30,4° für Ba₂SiO₄, 30,6° und 31,5° für BaCaSiO₄ und 32,0° und 32,5° für Ca₂SiO₄. Es lassen sich jedoch beliebige Zwischenzustände herstellen um die Positionen der Peaks anzupassen. Hierdurch kann die Überlappung des Diffraktogramms mit der lumineszierenden Komponente verbessert werden. Gleichzeitig wird das Auffinden der Verbindung durch Benutzen von Röntgenstrukturdatenbanken erschwert.

Ebenso ist es möglich, durch Substitution mit leichteren und/ oder schwereren Atomsorten die relativen Intensitätsverhältnisse der einzelnen Peaks eines Röntgendiffraktogramms stark zu beeinflussen, selbst wenn sich deren Positionen aufgrund gleichbleibender Gitterparameter nicht und nur schwach verändern. In Kombination mit der partiellen Übereinstimmung bestimmter Peaks des Substanzgemischs der lumineszierenden und tarnenden Komponenten lässt sich so ein besonders schwer zu analysierendes Röntgendiffraktogramm generieren.

Bevorzugt besitzen die lumineszierende und die tarnende Komponente zudem eine gleiche oder zumindest ähnliche Dichte, so dass sie nicht leicht z. B. durch Sedimentation getrennt werden können. Bevorzugt beträgt dabei die Abweichung der Dichte der tarnenden Komponente von der Dichte der lumineszierenden Komponente weniger als 50%, besonders bevorzugt weniger als 30%.

Durch die Verwendung weiterer Komponenten mit unterschiedlichen Funktionalitäten können zusätzliche vorteilhafte Eigenschaften für das Sicherheitsmerkmal erzielt werden, wobei zusätzlich eine erhöhte Sicherheit gegen Nachahmung erreicht werden kann. Die weiteren Komponenten sowie die lumineszierende Komponente und die tarnende Komponente können dabei in ihrer Menge und elementaren Zusammensetzung sowie zusätzlich in struktureller Hinsicht aufeinander abgestimmt sein.

Als weitere Komponente kann eine Produktionskomponente in dem Sicherheitsmerkmal enthalten sein. Das Sicherheitsmerkmal weist 0-30%, bevorzugt 0-20% der Produktionskomponente auf. Die Produktionskomponente wird verwendet, um eine gleichbleibende Qualität bzw. Signalintensität des Sicherheitsmerkmals bzw. der darin enthaltenen lumineszierenden Komponente zu gewährleisten. Abhängig von Herstellungsbedingungen wie den verwendeten Rohstoffchargen und darin enthaltenen Verunreinigungen, Glühparametern, Mahlparametern etc., kann es zu einer Intensitätsschwankung des Lumineszenzsignals der lumineszierenden Komponente kommen. Um solche Schwankungen auszugleichen, wird die Produktionskomponente dem Sicherheitselement in einem Anteil hinzugefügt, um das Lumineszenzsignal des so erhaltenen Sicherheitselements auf eine vorgegebene Nenngröße einzustellen. Dadurch wird verhindert, dass bei Einsatz des Sicherheitsmerkmals die jeweilige Dosierung bei der Einbringung des Sicherheitsmerkmals in Wertdokumente bei den oben beschriebenen Schwankungen variiert werden muss. Im Gegensatz zur tarnenden Komponente ist der Anteil der Produktionskomponente relativ zur lumineszierenden Komponente variabel, da der erforderliche Anteil der Produktionskomponente am Sicherheitsmerkmal, wie zuvor beschrieben, von den jeweiligen Produktionsbedingungen abhängt.

Es ist nicht zwingend notwendig, jedoch bevorzugt, dass es sich auch bei der Produktionskomponente um eine kristalline Substanz handelt. In diesem Fall ist es weiterhin bevorzugt, dass die Peakpositionen des Röntgendiffraktogramms der Produktionskomponente und der tarnenden bzw. lumineszierenden Komponente zumindest teilweise in der oben beschriebenen Art und Weise überlappen. Hierdurch kann eine Röntgenanalyse zusätzlich erschwert werden.

Zudem kann es vorgesehen sein, auch eine elementare Analyse und Trennung von lumineszierender Komponente, tarnender Komponente und Produktionskomponente zur verhindern oder zumindest zu erschweren. Dazu kann die Produktionskomponente sowohl mindestens ein Element der die lumineszierende Komponente bildenden Substanz und/ oder mindestens ein Element der die tarnende Komponente bildenden Substanz aufweisen. Weisen die lumineszierende Komponente und tarnende Komponente beispielsweise die oben beschriebenen Elemente A, B und C auf, weist die Produktionskomponente mindestens eines der Elemente A, B oder C auf. Die Produktionskomponente, kann daneben ein oder mehrere weitere Elemente D aufweisen, sowie Sauerstoff und/ oder Wasserstoff.

Eine weitere Komponente des Sicherheitsmerkmals kann von einer Kodierungskomponente gebildet werden. Die Kodierungskomponente ist im Sicherheitsmerkmal zu 0 bis 10%, bevorzugt zu 0,5 bis 4%, besonders bevorzugt zu 1 bis 3% enthalten. Es handelt sich bei der Kodierungskomponente um eine Substanz, die als forensisches Merkmal verwendet wird, durch welche z. B. unterschiedliche Produktionschargen, Lieferungen, Hersteller oder Verarbeiter markiert werden können. Bevorzugt wird die Kodierungskomponente von einem Luminophor gebildet. Der Luminophor muss jedoch nicht wie die lumineszierende Komponente im nichtsichtbaren Spektralbereich emittieren, sondern kann z. B. bevorzugt im sichtbaren Spektralbereich lumineszieren. Da die Kodierungskomponente als forensisches Merkmal ausgelegt ist, muss sie die oben beschriebenen Eigenschaften für die Auswertung bei hoher Transportgeschwindigkeit in Banknotenbearbeitungsmaschinen nicht aufweisen. Es ist jedoch darauf zu achten, dass die Auswertung der lumineszierenden Komponente durch die Kodierungskomponente nicht negativ beeinflusst wird. Vorzugsweise unterscheidet sich die Kodierungskomponente daher in Anregung und Emission möglichst stark von der lumineszierenden Komponente. Die Detektion der Kodierungskomponente kann über forensische Methoden erfolgen, z. B. durch den Einsatz eines Fluoreszenzmikroskops oder Messung mittels eines speziellen Laboraufbaus, wobei im Vergleich zur lumineszierenden Komponente auch deutlich längere Messzeiten (z. B. mehrere Minuten bis Stunden) zur sicheren Detektion notwendig sein können.

Als Kodierungskomponente werden bevorzugt mit Seltenerdmetallen und/ oder Übergangsmetallen beladene kollabierte Zeolithstrukturen benutzt, wie sie beispielsweise in DE 100 56 462 A1 beschrieben sind. Diese bieten den Vorteil, dass Zeolithe über Ionenaustausch einfach mit einer Vielzahl von Kationen beladen werden können. Ebenfalls bevorzugt eingesetzt werden mit Seltenerdmetallen und/ oder Übergangsmetallen dotierte Matrizen, welche schmalbandige Spektren im vis-Bereich aufweisen. Bevorzugt werden dabei die im vis-Bereich lumineszierenden dreiwertigen Seltenerdkationen von Praseodym, Samarium, Europium, Terbium, und Dysprosium als Dotierstoffe eingesetzt, und als Matrizen Oxide, z. B. in Form von Granaten, Spinellen, oder Perowskiten, sowie Oxisulfide, Sulfide, Silikate, Phosphate, Aluminate, Niobate, Tantalate, Vanadate, Germanate, Arsenate, Zirkonate oder Wolframate eingesetzt. Beispiele für solche und weitere Substanzen sind in den Schriften US 3,980,887, US 4,014,812, US 3,981,819 und WO 2006/047621 A1 beschrieben. Zusätzlich zum Anregungs- oder Emissionsspektrum kann dabei auch die Lebensdauer der Lumineszenz überprüft werden. Der Anteil an Seltenerdionen und/ oder Übergangsmetallen in der Kodierungskomponente kann dabei so hoch sein, dass er bei Elementaranalyse des Sicherheitsmerkmals mit der Konzentration aus Seltenerdmetallen und/oder Übergangsmetallen der Dotierstoffe der lumineszierenden Komponente vergleichbar ist. Hierdurch wird das Identifizieren der für die lumineszierende Komponente verwendeten Dotierstoffe erschwert. Wie bereits zuvor im Zusammenhang mit den anderen Komponenten ausgeführt, ist es bevorzugt, dass auch die Dotierung von Kodierungskomponente und lumineszierender Komponente mit unterschiedlichen Elementen erfolgt, da ansonsten eine chemische Analyse nicht erschwert, sondern erleichtert wird. Es können auch weitere, an der Lumineszenz nicht beteiligte Kationen in die Zeolithstruktur oder das Luminophor-Matrixmaterial eingebettet werden, um die elementare Zusammensetzung der Kodierungskomponente zu beeinflussen.

Neben der Kodierungskomponente können auch der Produktionskomponente und/oder der tarnenden Komponente Seltenerdmetalle und/oder Übergangsmetalle zugesetzt werden, um den Dotierstoff der lumineszierenden Komponente zusätzlich zu schützen. Die Mengen an Seltenerdmetallen und/ oder Übergangsmetallen werden dabei wie zuvor im Zusammenhang mit der Vertarnung der Dotierstoffe bzw. mit der Kodierungskomponente beschrieben, d. h. die Menge zugesetzter Seltenerdmetalle und/ oder Übergangsmetalle ist vergleichbar mit der Menge der Dotierstoffe der lumineszierenden Komponente.

Neben der Produktions- und Kodierungskomponenten können dem Sicherheitsmerkmal weitere funktionale Komponenten zugesetzt sein, welche dabei ebenfalls nicht notwendigerweise eine tarnende Wirkung beinhalten müssen. Beispiele für solche zusätzlichen Komponenten wären z. B. Farbstoffe zur Anpassung der Farbe des Sicherheitsmerkmals, Lumineszenzsabsorber welche ungewollte sichtbare Fluoreszenzen des Sicherheitsmerkmals unterdrücken, oder Fließmittel um die Rheologie eines das Sicherheitsmerkmal bildenden Pulvers einzustellen.

Ebenso kann die lumineszierende Komponente mehr als eine lumineszierende Substanz aufweisen, d. h. mehr als einen Luminophor. In diesem Fall sind bevorzugt für jeden Luminophor der lumineszierenden Komponente entsprechende Substanzen in der tarnenden Komponente vorgesehen. Ist dies z. B. aus technischen Gründen nicht möglich oder mit erhöhtem Aufwand verbunden, kann es ausreichend sein nur einen einzigen Luminophor einer Luminophorkombination zu vertarnen, da üblicherweise alle Luminophore einer Luminophorkombination zur erfolgreichen Nachahmung des Sicherheitsmerkmals identifiziert werden müssen. In solchen Fällen wird bevorzugt nur einer der mehreren Luminophore durch die tarnende Komponente geschützt. Falls für die Luminophore ähnliche Substanzen verwendet werden, z. B. gleichartige Matrizen mit unterschiedlichen Dotierstoffen, kann es teilweise ausreichend sein, für die ähnlichen Substanzen der lumineszierenden Komponente nur jeweils eine einzelne Substanz in der tarnenden Komponente vorzusehen, um jeweils eine Vertarnung der Struktur oder der Zusammensetzung beider Luminophore zu erreichen.

Das Sicherheitsmerkmal kann in den Wertdokumenten dazu verwendet werden, deren Echtheit abzusichern und/ oder eine Kodierung bestimmter Eigenschaften darstellen, beispielsweise einer Währung und/oder Denomination usw., falls es sich bei den Wertdokumenten um Banknoten handelt.

### Beispiel 1

Als lumineszierende Komponente (M) wird eine lumineszierende Substanz CaNb₂O₆:Nd, bestehend aus einem Wirtsgitter (Matrix) aus Calciumniobat, das mit Neodym dotiert ist, eingesetzt, die durch Glühen einer Mischung von 2,675g CaCO₃, 7,234g Nb₂O₅ und 0,092g Nd₂O₃ für 10h bei 1150°C hergestellt wurde. Bei Anregung bei 532 nm emittiert die lumineszierende Komponente bei 1061 nm. Der Hauptpeak im Diffraktogramm der lumineszierenden Komponente liegt hier bei 29,2°.

Zur Strukturtarnung (R) kann monoklines Zr(MoO₄)₂ eingesetzt werden, dessen Hauptpeak bei 29,1° liegt. Gleichzeitig werden durch Zr(MoO₄)₂ die zusätzlichen kationischen Elemente Zr und Mo zur Elementartarnung (E) eingebracht. Zur Tarnung der Stöchiometrie (S) der lumineszierenden Komponente kann Nb₂O₅ zugegeben werden. Nb₂O₅ kann ebenfalls zum Produktionsausgleich (P) eingesetzt werden. Als Kodierungskomponente (K) wird CaTa₂O₆:Sm_{0,03} (Emission bei 610 nm) verwendet. Zur Tarnung der Dotierstoffe (D) werden geringe Mengen Er₂O₃ und Yb₂O₃ verwendet.

Ein Sicherheitsmerkmal aus lumineszierender und tarnender Komponente mit Produktionsausgleich und Kodierungskomponente hat dann beispielsweise die Zusammensetzung:

| | |
|---|---|
| 40% CaNb₂O₆:Nd | (M) |
| 30% Zr(MoO₄)₂ | (R, E) |
| 26% Nb₂O₅ | (S, P) |
| 2,5% CaTa₂O₆:Sm | (K) |
| 1% Er₂O₃ | (D) |
| 0,5% Yb₂O₃ | (D) |

### Beispiel 2

Die lumineszierende Komponente (M) ist identisch zu dem in Beispiel 1 beschriebenen Luminophor. Die Struktur wird nicht getarnt. Eine Tarnung der Stöchiometrie (S) wird durch Zusatz von Ca₃(PO₄)₂ erreicht. Das Element P der Substanz Ca₃(PO₄)₂ bewirkt zudem eine Elementartarnung (E). Zusätzliche kationische Elemente (E) Sr und Al werden durch Zugabe von SrAl₂O₄ eingebracht. Als Produktionsausgleich (P) wird Sr₃(PO₄)₂ verwendet. Die Elemente Sr und P der für den Pröduktionsausgleich verwendeten Substanz bewirken zudem eine Elementartarnung (E). Zur Tarnung der Dotierstoffe (D) werden geringe Mengen Yb₂O₃ und Tm₂O₃ eingesetzt. Die Kodierungskomponente (K) ist identisch zu der in Beispiel 1.

Ein Sicherheitsmerkmal aus lumineszierender und tarnender Komponente mit Produktionsausgleich und Kodierungskomponente hat dann beispielsweise die Zusammensetzung:

| | |
|---|---|
| 35% CaNb₂O₆:Nd | (M) |
| 20% Ca₃(PO₄)₂ | (S, E) |
| 20% SrAl₂O₄ | (E) |
| 20% Sr₃(PO₄)₂ | (P, E) |
| 3% CaTa₂O₆:Sm | (K) |
| 1% Yb₂O₃ | (D) |
| 1% Tm₂O₃ | (D) |

### Beispiel 3

Basierend auf den Stoffen aus Beispiel 1 wird zusätzlich die Lumineszenzemission durch zwei organische Luminophore (L) getarnt. Es handelt sich dabei um eine Mischung aus einem vierkernigen Neodym-Komplex mit 2-Thenoyltrifluoroaceton (HTTA) als Liganden, welcher im Bereich 1050-1100 nm fluoresziert, und dem kommerziell erhältlichen Polymethin IR-1061 (Sigma Aldrich), welcher im Bereich von 1020-1180 nm fluoresziert.

Ein Sicherheitsmerkmal aus lumineszierender und tarnender Komponente mit Produktionsausgleich und Kodierungskomponente hat dann beispielsweise die Zusammensetzung:

| | |
|---|---|
| 30% CaNb₂O₆:Nd | (M) |
| 30% Zr(MoO₄)₂ | (R, E) |
| 26% Nb₂O₅ | (S, P) |
| 5% Nd₄(TTA)₁₀O₁₂H₂₂ | (L) |
| 5% IR-1061 | (L) |
| 2,5% CaTa₂O₆:Sm | (K) |
| 1% Er₂O₃ | (D) |
| 0,5% Yb₂O₃ | (D) |

### Beispiel 4

Als lumineszierende Komponente (M) wird ein Y_{1,98}Nd_{0,02}SiO₅ eingesetzt, welches durch Mischen von 2,66g Harnstoff, 0,53g SiO₂, 6,72g Y(NO₃)₃. 6H₂O, 0,08g Nd(NO₃)₃·5H₂O und 3mL H₂O, Eindampfen der Flüssigkeit bei 500°C, und Glühen des erhaltenen Materials bei 1500°C für 10h hergestellt wurde. Bei Anregung bei 532 nm emittiert die lumineszierende Komponente bei 1075 nm.

Ein signifikanter Peak (>70% Hauptpeak) im Röntgendiffraktogramm liegt bei 22,8°. Zur Tarnung des Röntgendiffraktogramins (R) kann NaTaO₃ verwendet werden, dessen Hauptpeak bei 22,8° liegt. Die Elemente Na und Ta bewirken zudem eine Elementartarnung (E). Eine Tarnung der Stöchiometrie (S) und Einbringung zusätzlicher kationischer Elemente (E) wird durch Zugabe von YAlO₃ erreicht. YAlO₃ kann ebenfalls als Produktionsausgleich (P) verwendet werden. Zur Tarnung der Dotierstoffe (D) werden geringe Mengen Yb₂O₃ und Ce₂O₃ eingesetzt. Als Kodierungskomponente (K) wird La-OBr:Tb verwendet (Emission bei 543 nm).

Ein Sicherheitsmerkmal aus lumineszierender und tarnender Komponente mit Produktionsausgleich und Kodierungskomponente hat dann beispielsweise die Zusammensetzung:

| | |
|---|---|
| 35% Y_{1,98}Nd_{0,02}SiO₅ | (M) |
| 30% NaTaO₃ | (R, E) |
| 31% YAlO₃ | (S, E, P) |
| 2% LaOBr:Tb | (K) |
| 1% Yb₂O₃ | (D) |
| 1% Ce₂O₃ | (D) |

### Beispiel 5

Die lumineszierende Komponente (M) ist identisch zu dem in Beispiel 4 beschriebenen Luminophor. Zur Vertarnung der Stöchiometrie (S) und Einbringung zusätzlicher kationischer Elemente (E) wird NaAlSiO₄ eingesetzt. Als Produktionsausgleich (P) und zum Einbringen zusätzlicher kationischer Elemente (E) wird BaSO₄ eingesetzt. Zur Vertarnung der Dotierstoffe (D) werden geringe Mengen Tm₂O₃ und Sm₂O₃ eingesetzt. Die Kodierungskomponente (K) ist identisch mit der aus Beispiel 4.

Ein Sicherheitsmerkmal aus lumineszierender und tarnender Komponente mit Produktionsausgleich und Kodierungskomponente hat dann beispielsweise die Zusammensetzung:

| | |
|---|---|
| 40% Y_{1,98}Nd_{0,02}SiO₅ | (M) |
| 30% NaAlSiO₄ | (S, E) |
| 26% BaSO₄ | (P, E) |
| 2% LaOBr:Tb | (K) |
| 1% Tm₂O₃ | (D) |
| 1% Sm₂O₃ | (D) |

### Beispiel 6

Basierend auf den Stoffen aus Beispiel 4 wird zusätzlich die Lumineszenzemission durch einen organischen Luminophor (L) getarnt. Es handelt sich dabei um IR-1048 (Sigma Aldrich), welcher im Bereich von 1050-1150 nm fluoresziert.

Ein Sicherheitsmerkmal aus lumineszierender und tarnender Komponente mit Produktionsausgleich und Kodierungskomponente hat dann beispielsweise die Zusammensetzung:

| | |
|---|---|
| 30% Y_{1.98}Nd_{0.02}SiO₅ | (M) |
| 30% NaTaO₃ | (R, E) |
| 30% YAlO₃ | (S, E, P) |
| 5% IR-1048 | (L) |
| 3% LaOBr:Tb | (K) |
| 1% Yb₂O₃ | (D) |
| 1% Ce₂O₃ | (D) |

### Beispiel 7

Als lumineszierende Komponente (M) wird ein KTiO(PO₄):Er eingesetzt, welches durch Glühen einer Mischung von 18,78g KH₂PO₄, 10,90g TiO₂ und 0,61g Er₂O₃ bei 800°C für 12h hergestellt wurde. Bei Anregung bei 520 nm emittiert die lumineszierende Komponente bei 1540 nm. Der Hauptpeak im Diffraktogramm der lumineszierenden Komponente liegt bei 32,3°, mit einem dicht benachbarten signifikanten Peak (>70% des Hauptpeaks) bei 32,6°. Zur Tarnung des Röntgendiffraktogramms (R) kann LaMnO₃ eingesetzt werden, welches im Diffraktogramm zwei signifikante Peaks (90-100% des Hauptpeaks) bei 32,3° und 32,6° besitzt. Die Elemente La und Mn bewirken zudem eine Elementartarnung (E). Zur Vertarnung der Stöchiometrie (S) kann TiO₂ zugefügt werden, welches gleichzeitig als Produktionsausgleich (P) verwendet werden kann. Zur Tarnung der Dotierstoffe (D) werden geringe Mengen Nd₂O₃, Ce₂O₃ und Ho₂O₃ eingesetzt. Die Kodierungskomponente (K) ist Y₂SiO₅:Ce, welches bei 420 nm emittiert.

Ein Sicherheitsmerkmal aus lumineszierender und tarnender Komponente mit Produktionsausgleich und Kodierungskomponente hat dann beispielsweise die Zusammensetzung:

| | |
|---|---|
| 30% KTiO(PO₄):Er | (M) |
| 30% LaMnO₃ | (R, E) |
| 35% TiO₂ | (S, P) |
| 2% Y₂SiO₅:Ce | (K) |
| 1% Ce₂O₃ | (D) |
| 1 % Nd₂O₃ | (D) |
| 1% Ho₂O₃ | (D) |

### Beispiel 8

Die lumineszierende Komponente (M) ist identisch zu dem in Beispiel 7 beschriebenen Luminophor. Zur Vertarnung der Stöchiometrie (S) und Einbringung zusätzlicher kationischer Elemente (E) wird CaTiO₃ verwendet. Zusätzliche kationische Elemente (E) werden durch Zugabe von ZrSiO₄ eingebracht, welches gleichzeitig als Produktionsausgleich (P) dienen kann. Zur Tarnung der Dotierstoffe (D) werden geringe Mengen Nd₂O₃, Ce₂O₃ und Ho₂O₃ eingesetzt. Die Kodierungskomponente (K) ist identisch zu der in Beispiel 7.

Ein Sicherheitsmerkmal aus lumineszierender und tarnender Komponente mit Produktionsausgleich und Kodierungskomponente hat dann beispielsweise die Zusammensetzung:

| | |
|---|---|
| 30% KTiO(PO₄):Er | (M) |
| 30% CaTiO₃ | (S, E) |
| 35% ZrSiO₄ | (E, P) |
| 2% Y₂SiO₅:Ce | (K) |
| 1% C₂O₃ | (D) |
| 1% Nd₂O₃ | (D) |
| 1% Ho₂O₃ | (D) |

### Beispiel 9

Basierend auf den Stoffen aus Beispiel 8 wird zusätzlich die Lumineszenzemission durch einen organischen Luminophor (L) vertarnt. Es handelt sich dabei um den acyclischen Erbium-Komplex acyc-H, wie er in der Literaturstelle "L. Slooff, A. Polman, M. Oude Wolbers, F. van Veggel, D. Reinhoudt, J. Hofstraat; J. Appl. Phys. 83 (1) 1998, S. 497-503" beschrieben ist, welcher im Bereich von 1480-1600 nm fluoresziert.

Ein Sicherheitsmerkmal aus lumineszierender und tarnender Komponente mit Produktionsausgleich und Kodierungskomponente hat dann beispielsweise die Zusammensetzung:

| | |
|---|---|
| 28% KTiO(PO₄):Er | (M) |
| 28% CaTiO₃ | (S, E) |
| 29% ZrSiO₄ | (E, P) |
| 10% acyc-H | (L) |
| 2% Y₂SiO₅:Ce | (K) |
| 1% Ce₂O₃ | (D) |
| 1% Nd₂O₃ | (D) |
| 1% Ho₂O₃ | (D) |

## Patentansprüche

1. Sicherheitsmerkmal mit einer lumineszierenden Komponente mit mindestens einem Luminophor, bestehend aus einem dotierten Wirtsgitter, und einer die lumineszierende Komponente tarnenden Komponente, **dadurch gekennzeichnet, dass** eine Identifizierung der lumineszierenden Komponente dadurch erschwert oder verhindert ist, dass Eigenschaften der tarnenden Komponente und jeweils gleichartige Eigenschaften der lumineszierenden Komponente durch nachfolgende Beziehungen charakterisiert sind:
a) die tarnende Komponente weist ein Röntgendiffraktogramm auf, welches sich mit dem Röntgendiffraktogramm der lumineszierenden Komponente zumindest teilweise überlappt, um die Struktur der lumineszierenden Komponente zu tarnen,
b) die tarnende Komponente enthält mindestens ein kationisches Element, welches auch in einem Wirtsgitter der lumineszierenden Komponente enthalten ist, jedoch nicht alle in diesem Wirtsgitter enthaltenen kationischen Elemente, um die Stöchiometrie der lumineszierenden Komponente zu tarnen,
c) die tarnende Komponente enthält mindestens ein kationisches Element, welches nicht in einem Wirtsgitter der lumineszierenden Komponente enthalten ist, um den elementaren Aufbau dieses Wirtsgitters der lumineszierenden Komponente zu tarnen,
d) die tarnende Komponente enthält mindestens einen Dotierstoff, der nicht als Dotierstoff in der lumineszierenden Komponente enthalten ist, um den oder die Dotierstoffe der lumineszierenden Komponente zu tarnen,
e) die tarnende Komponente enthält mindestens einen Luminophor, der eine geringere Abklingzeit als der in der lumineszierenden Komponente enthaltene Luminophor aufweist, um die spektralen Eigenschaften der lumineszierenden Komponente zur tarnen
und weiter **dadurch gekennzeichnet, dass** die tarnende Komponente und die lumineszierende Komponente mindestens die Beziehungen a) und b) erfüllen.

2. Sicherheitsmerkmal nach Anspruch 1, **dadurch gekennzeichnet, dass** die tarnende Komponente und die lumineszierende Komponente die Beziehungen a), b), c) und d) erfüllen.

3. Sicherheitsmerkmal nach Anspruch 1, **dadurch gekennzeichnet, dass** die tarnende Komponente und die lumineszierende Komponente die Beziehungen a), b), c), d) und e) erfüllen.

4. Sicherheitsmerkmal nach einem der Ansprüche 1 bis 3, **dadurch gekennzeichnet, dass** das Röntgendiffraktogramm der lumineszierenden Komponente und das Röntgendiffraktogramm der tarnenden Komponente eine teilweise Überlappung in signifikanten Peaks aufweisen, wobei mindestens eine, vorzugsweise zwei, besonders bevorzugt drei relevante Peakpositionen überlappen.

5. Sicherheitsmerkmal nach Anspruch 4, **dadurch gekennzeichnet, dass** die überlappenden Peaks mindestens 30%, bevorzugt mindestens 50% der Höhe eines Hauptpeaks aufweisen.

6. Sicherheitsmerkmal nach Anspruch 4, **dadurch gekennzeichnet, dass** die überlappenden Peaks ein Hauptpeak, bevorzugt beide Hauptpeaks von lumineszierender Komponente und tarnender Komponente sind.

7. Sicherheitsmerkmal nach einem der Anspruch 1 bis 6, **dadurch gekennzeichnet, dass** die kationischen Elemente aus den Hauptgruppenelementen Li, Be, B, Na, Mg, Al, Si, P, S, K, Ca, Ga, Ge, As, Se, Rb, Sr, In, Sn, Sb, Te, Cs, Ba, Tl, Pb, Bi oder den Elementen der Übergangsmetalle oder den Seltenerdelementen ausgewählt sind.

8. Sicherheitsmerkmal nach einem der Ansprüche 1 bis 7, **dadurch gekennzeichnet, dass** der Dotierstoff der lumineszierenden Komponente ein Seltenerdelement ist und die tarnende Komponente mindestens einen Dotierstoff aus den Elementen der Seltenerden Ce, Pr, Nd, Sm, Eu, Tb, Dy, Ho, Er, Tm, Yb enthält.

9. Sicherheitsmerkmal nach einem der Ansprüche 1 bis 8, **dadurch gekennzeichnet, dass** der Dotierstoff der lumineszierenden Komponente ein Übergangsmetall der vierten Periode des Periodensystems ist, und die tarnende Komponente mindestens einen anderen Dotierstoff aus den Elementen der vierten Periode des Periodensystems enthält.

10. Sicherheitsmerkmal nach einem der Ansprüche 1 bis 9, **dadurch gekennzeichnet, dass** der Luminophor der tarnenden Komponente ein nichtanorganischer Luminophor ist, insbesondere ein organischer oder metallorganischer Luminophor.

11. Sicherheitsmerkmal nach einem der Ansprüche 1 bis 10, **dadurch gekennzeichnet, dass** der Luminophor eine Abklingzeit von kleiner 10 µs, bevorzugt kleiner 1 µs aufweist.

12. Sicherheitsmerkmal nach einem der Ansprüche 1 bis 11, **dadurch gekennzeichnet, dass** die tarnende Komponente zusätzlich oder statt des zumindest teilweise überlappenden Röntgendiffraktogramm weitere Strukturmerkmale aufweist, welche mit entsprechenden Strukturmerkmalen der lumineszierenden Komponente zumindest teilweise übereinstimmen, um die Struktur der lumineszierenden Komponente zu tarnen.

13. Wertdokument mit einem Sicherheitsmerkmal nach einem der Ansprüche 1 bis 12, **dadurch gekennzeichnet, dass** das Wertdokument aus Papier und/oder Kunststoff besteht.

14. Wertdokument nach Anspruch 13, **dadurch gekennzeichnet, dass** das Sicherheitsmerkmal in das Volumen des Wertdokumentes eingebracht und/ oder auf das Wertdokument aufgebracht ist.

15. Wertdokument nach Anspruch 12 oder 13, **dadurch gekennzeichnet, dass** das Sicherheitsmerkmal als unsichtbare, zumindest teilweise Beschichtung auf das Wertdokument aufgebracht ist.

## Claims

1. A security feature having a luminescent component having at least one luminophore consisting of a doped host lattice, and a component camouflaging the luminescent component,
**characterized in that** an identification of the luminescent component is impeded or prevented by properties of the camouflaging component and respective like-kind properties of the luminescent component being **characterized by** the following relations:
a) the camouflaging component has an X-ray diffractogram that at least partly overlaps with the X-ray diffractogram of the luminescent component, in order to camouflage the structure of the luminescent component,
b) the camouflaging component contains at least one cationic element that is also contained in a host lattice of the luminescent component, but not all cationic elements contained in this host lattice, in order to camouflage the stoichiometry of the luminescent component,
c) the camouflaging component contains at least one cationic element that is not contained in a host lattice of the luminescent component, in order to camouflage the elemental constitution of this host lattice of the luminescent component,
d) the camouflaging component contains at least one dopant that is not contained as a dopant in the luminescent component, in order to camouflage the dopant or dopants of the luminescent component,
e) the camouflaging component contains at least one luminophore that has a lower decay time than the luminophore contained in the luminescent component, in order to camouflage the spectral properties of the luminescent component,
and further **characterized in that** the camouflaging component and the luminescent component satisfy at least the relations a) and b).

2. The security feature according to claim 1, **characterized in that** the camouflaging component and the luminescent component satisfy the relations a), b), c) and d).

3. The security feature according to claim 1, **characterized in that** the camouflaging component and the luminescent component satisfy the relations a), b), c), d) and e).

4. The security feature according to any of claims 1 to 3, **characterized in that** the X-ray diffractogram of the luminescent component and the X-ray diffractogram of the camouflaging component have a partial overlap in significant peaks, with at least one, preferably two, particularly preferably three, relevant peak positions overlapping.

5. The security feature according to claim 4, **characterized in that** the overlapping peaks have at least 30%, preferably at least 50%, of the height of a main peak.

6. The security feature according to claim 4, **characterized in that** the overlapping peaks are a main peak, preferably both main peaks, of luminescent component and camouflaging component.

7. The security feature according to any of claims 1 to 6, **characterized in that** the cationic elements are selected from the main group elements Li, Be, B, Na, Mg, Al, Si, P, S, K, Ca, Ga, Ge, As, Se, Rb, Sr, In, Sn, Sb, Te, Cs, Ba, Tl, Pb, Bi or the elements of the transition metals or the rare earth elements.

8. The security feature according to any of claims 1 to 7, **characterized in that** the dopant of the luminescent component is a rare earth element, and the camouflaging component contains at least one dopant consisting of the elements of the rare earths Ce, Pr, Nd, Sm, Eu, Tb, Dy, Ho, Er, Tm, Yb.

9. The security feature according to any of claims 1 to 8, **characterized in that** the dopant of the luminescent component is a transition metal of the fourth period of the periodic system, and the camouflaging component contains at least one other dopant consisting of the elements of the fourth period of the periodic system.

10. The security feature according to any of claims 1 to 9, **characterized in that** the luminophore of the camouflaging component is a non-inorganic luminophore, in particular an organic or metalorganic luminophore.

11. The security feature according to any of claims 1 to 10, **characterized in that** the luminophore has a decay time of less than 10 µs, preferably less than 1 µs.

12. The security feature according to any of claims 1 to 11, **characterized in that** the camouflaging component has, additionally or instead of the at least partly overlapping X-ray diffractogram, further structural features that at least partly match corresponding structural features of the luminescent component, in order to camouflage the structure of the luminescent component.

13. A value document having a security feature according to any of claims 1 to 12, **characterized in that** the value document consists of paper and/or plastic.

14. The value document according to claim 13, **characterized in that** the security feature is incorporated into the volume of the value document and/or applied to the value document.

15. The value document according to claim 12 or 13, **characterized in that** the security feature is applied to the value document as an invisible, at least partial coating.

## Revendications

1. Caractéristique de sécurité comprenant un composant luminescent doté d'au moins un luminophore consistant en un réseau hôte dopé et d'un composant masquant le composant luminescent, **caractérisé en ce qu'**une identification du composant luminescent est entravée ou empêchée par le fait que des propriétés du composant masquant et des propriétés respectivement de même nature du composant luminescent sont définies par les relations suivantes :
a) le composant masquant présente un diffractogramme de rayons X qui se chevauche au moins partiellement avec le diffractogramme de rayons X du composant luminescent afin de masquer la structure du composant luminescent,
b) le composant masquant contient au moins un élément cationique contenu aussi dans un réseau hôte du composant luminescent, mais pas tous les éléments cationiques contenus dans ce réseau hôte, afin de masquer la stoechiométrie du composant luminescent,
c) le composant masquant contient au moins un élément cationique non contenu dans un réseau hôte du composant luminescent, afin de masquer la composition élémentaire de ce réseau hôte du composant luminescent,
d) le composant masquant contient au moins une substance de dopage non contenue en tant que substance de dopage dans le composant luminescent, afin de masquer la ou les substances de dopage du composant luminescent,
e) le composant masquant contient au moins un luminophore présentant un temps de décroissance inférieur à celui du luminophore contenu dans le composant luminescent, afin de masquer les propriétés spectrales du composant luminescent,
et en outre **caractérisé en ce que** le composant masquant et le composant luminescent satisfont au moins aux relations a) et b).

2. Caractéristique de sécurité selon la revendication 1, **caractérisé en ce que** le composant masquant et le composant luminescent satisfont aux relations a), b), c) et d).

3. Caractéristique de sécurité selon la revendication 1, **caractérisé en ce que** le composant masquant et le composant luminescent satisfont aux relations a), b), c), d) et e).

4. Caractéristique de sécurité selon une des revendications de 1 à 3, **caractérisé en ce que** le diffractogramme de rayons X du composant luminescent et le diffractogramme de rayons X du composant masquant présentent un chevauchement partiel en des pics significatifs, cependant qu'au moins une, de préférence deux, particulièrement de préférence trois positions pertinentes de pics se chevauchent.

5. Caractéristique de sécurité selon la revendication 4, **caractérisé en ce que** les pics se chevauchant ont au moins 30 %, de préférence au moins 50 % de la hauteur d'un pic principal.

6. Caractéristique de sécurité selon la revendication 4, **caractérisé en ce que** les pics se chevauchant sont un pic principal, de préférence tous les deux des pics principaux du composant luminescent et du composant masquant.

7. Caractéristique de sécurité selon une des revendications de 1 à 6, **caractérisé en ce que** les éléments cationiques sont sélectionnés parmi les éléments de groupes principaux Li, Be, B, Na, Mg, Al, Si, P, S, K, Ca, Ga, Ge, As, Se, Rb, Sr, In, Sn, Sb, Te, Cs, Ba, Tl, Pb, Bi ou parmi les éléments des métaux de transition ou des éléments des terres rares.

8. Caractéristique de sécurité selon une des revendications de 1 à 7, **caractérisé en ce que** la substance de dopage du composant luminescent est un élément des terres rares, et **en ce que** le composant masquant contient au moins une substance de dopage comprise dans les éléments des terres rares Ce, Pr, Nd, Sm, Eu, Tb, Dy, Ho, Er, Tm, Yb.

9. Caractéristique de sécurité selon une des revendications de 1 à 8, **caractérisé en ce que** la substance de dopage du composant luminescent est un métal de transition de la quatrième période du tableau périodique, et **en ce que** le composant masquant contient au moins une autre substance de dopage comprise dans les éléments de la quatrième période du tableau périodique.

10. Caractéristique de sécurité selon une des revendications de 1 à 9, **caractérisé en ce que** le luminophore du composant masquant est un luminophore non inorganique, en particulier un luminophore organique ou organométallique.

11. Caractéristique de sécurité selon une des revendications de 1 à 10, **caractérisé en ce que** le luminophore présente un temps de décroissance inférieur à 10 µs, de préférence inférieur à 1 µs.

12. Caractéristique de sécurité selon une des revendications de 1 à 11, **caractérisé en ce que** le composant masquant présente, en plus ou au lieu du diffractogramme de rayons X se chevauchant au moins partiellement, d'autres caractéristiques structurales qui coïncident au moins partiellement avec des caractéristiques correspondantes de structure du composant luminescent, afin de masquer la structure du composant luminescent.

13. Document de valeur comportant une caractéristique de sécurité selon une des revendications de 1 à 12, **caractérisé en ce que** le document de valeur se compose de papier et/ou de matière plastique.

14. Document de valeur selon la revendication 13, **caractérisé en ce que** la caractéristique de sécurité est incorporée dans le volume du document de valeur et/ou est appliquée sur le document de valeur.

15. Document de valeur selon la revendication 12 ou 13, **caractérisé en ce que** la caractéristique de sécurité est appliquée sous forme de revêtement invisible au moins partiel sur le document de valeur.
